# EUROPEAN PATENT SPECIFICATION

(11) **EP 3 332 962 B1**
(45) Date of publication and mention of the grant of the patent: **07.10.2020**
(21) Application number: 15900296.3
(22) Date of filing: 06.08.2015
(51) Int. Cl.: B32B 27/40, B32B 5/18, B32B 3/02, B32B 7/12, B32B 9/00, B32B 17/00, A47B 96/18, A47B 77/02

(54) **COMPOSITE BUILDING ELEMENT**
VERBUNDBAUELEMENT
ÉLÉMENT DE CONSTRUCTION COMPOSITE

(30) Priority: 03.08.2015 ES 201531156
(43) Date of publication of application: 13.06.2018
(73) Proprietor: Pear Panel, Sociedade Unipessoal, Lda., 28821 Coslada (Madrid) (ES)
(72) Inventor: AREIAS, Rui, 3520-096 Nelas (PT)
(74) Representative: Rodriguez Oca, Jesus
(86) International application number: PCT/ES2015/070615
(87) International publication number: WO 2017/021566

(56) References cited:
- DE-A1- 3 709 224
- DE-A1- 19 907 309
- DE-A1- 19 907 309
- DE-U1-202006 012 031
- DE-U1-202014 103 955
- ES-A1- 2 244 318
- GB-A- 2 512 180
- US-A- 3 646 180

## Description

The present invention relates to a composite construction element, being it understood as an element which may be used either alone or in combination with other similar ones, and which enables to shape and build vertical and/or horizontal surfaces within a building or dwelling, such as interior or exterior panels, walls and dwarf walls, staircase steps, door panels or panels for furniture and other elements.

Specifically, the invention provides a composite construction element which is light-weighted and easy to handle, and with shows a high thermal, mechanical and acoustic resistance, which is also resistant against chemicals such as oils, detergents, or microorganisms, comprising a sandwich-type panel consisting of an inner core made of expanded polyurethane, covered on all sides with a plastic resin made of polyvinyl chloride (PVC), a fiberglass reinforced polyester resin or a high-pressure laminate (HPL) plate, and a coating layer laid on the top surface of the panel as a finishing layer, made of a ceramic material.

This construction element is especially appropriate for the manufacturing of panels and walls or highly heat-resistant flat surfaces, especially for the manufacturing of countertops and work surfaces that are exposed to heat sources or chemicals, or are used under heavy mechanical stresses.

Construction elements based on wood conglomerate or plaster cores with outer finishing layers made of different materials and intended for the construction of partition walls or flat surfaces, like countertops, are widely known. However, this type of elements is usually difficult to manipulate, either as a result of the nature of their core materials, or due to the poor mechanical strength properties of the core and the finishing layer.

There are countertops available in the market that comprise a wood conglomerate core covered by a plastic surface that, while showing a certain degree of mechanical strength, for instance, against scratches, they do not have enough thermal resistance. Similarly, there are several solid countertops made of ceramic or stone materials that, while they show sufficient thermal resistance and a high degree of hardness, are difficult to cut and handle, as a result of their low mechanical resistance to breaking and their heavy weight, but they are also expensive and difficult to access.

For instance, in the case of patent EP1749587, "Wood-based board for building applications and method for making it", said patent describes a method for the manufacturing of a wood composite consisting of an upper surface layer and a lower surface layer, comprising at least three layers of wood chips glued with resin, which is pressed under high pressure and temperature, and where, after pressing, at least a water-based lacquer coating is applied to the upper surface layer and where additives and/or fillers are directly added to the coating after its application.

The international patent application WO 2010122196, "Laminated material including a central core made from high-density foam and at least one stainless steel sheet, and production and machining methods" describes a laminate comprising a high-density foam core, having a stainless steel sheet secured to one face thereof and another metal sheet, optionally made of stainless steel, secured to the other face, and where the metal sheets are smoothed, coated with a primer, dried in a furnace and coated with a special adhesive, and subsequently the central core undergoes a surface treatment and, the sheets are finally affixed to the central core.

The present invention provides a construction element, as previously defined, which is light weighted and easy to handle, with a high thermal, mechanical and acoustic resistance, which is also highly resistant against chemicals such as oils, detergents or microorganisms, consisting of a sandwich-type panel comprising an inner core made of expanded polyurethane, covered on all sides with a plastic resin made of polyvinyl chloride (PVC), a fiberglass reinforced polyester resin or a high-pressure laminate (HPL) plate, and a coating layer consisting of a plate laid on the top surface of the panel as a finishing layer, made of a ceramic material.

Similar construction elements are disclosed in patent applications DE 19907309, DE 3709224, and US 3646180; in none of these, however, are all sides of the expanded polyurethane core covered with a PVC layer, a glass-fibre-reinforced polyester resin layer, or an HPL layer.

According to the present invention, preferably, the PVC layer, the glass-fibre-reinforced polyester resin layer, or the HPL layer have a thickness ranging from 1 to 4 mm.

As far as the shaping of the construction element is concerned, the upper facing of the panel comprises a ceramic coating layer of an appropriate thickness, preferably 3 mm thick, affixed to said upper facing by means of a reactive polyurethane (PUR) adhesive used as a finishing layer.

In an exemplary embodiment, the ceramic coating layer used as the finishing layer is based on granite, quartz, artificial stone or other similar ceramic materials.

Another object of the invention is the use of the construction element, especially for the manufacturing of countertops or surfaces that require a high thermal resistance, since it is especially suitable to obtain countertops of a "prefabricated" type, tailored to the appropriate size and that only require a finishing process in those uncoated exposed surfaces, a process which is known in the art as edging.

The countertop obtained from the construction element according to the invention offers many advantages compared to those belonging to the prior art, as they are very light weighted, approximately 9-10 kg/m², depending on the finishing layer chosen, show a high hardness, are resistant to dirt and the attack of cleaning products and show a high thermal resistance. On the other hand, thanks to its structure, it is very easy to cut and drill and its design can be adapted to many shapes.

Although the use of the construction element is shown in connection with the manufacture of countertops, such use is not limited thereto and it can be used as an insulating coating for internal or external facades, for the construction of low weight staircases, for the manufacturing of furniture and door panels, and for the building of walls or partitions.

## Claims

1. A composite construction element, **characterized in that** it consists of a sandwich-type panel that includes an inner core consisting of expanded polyurethane coated on all of the faces thereof with a polyvinyl chloride (PVC) plastic resin, a glass-fibre-reinforced polyester resin, or a high-pressure-laminated (HPL) board, and a coating layer laid over one of the upper surfaces of the panel, in the form of a finishing layer produced from a ceramic material.

2. A composite construction element according to claim 1, **characterized in that** the PVC layer, the glass-fibre-reinforced polyester resin layer, or the HPL layer have a thickness ranging from 1 to 4 mm.

3. A composite construction element according to claim 1, **characterized in that** the ceramic coating plate is 3 mm thick.

4. A composite construction element according to claim 1, **characterized in that** the ceramic coating plate used as a finishing layer is made of granite, quartz, or artificial stone.

5. A composite construction element according to any of the claims 1 to 4 for use in the construction of countertops and/or surfaces showing a high thermal resistance, wherein a finishing process is applied to non-coated exposed surfaces.

6. A composite construction element according to any of the claims 1 to 4 for use as an insulating coating for interior or exterior facades, for the construction of low weight staircases, for the manufacturing of furniture and door panels, and for the building of walls or partitions.

## Patentansprüche

1. Verbundbauelement, **dadurch gekennzeichnet, dass** es aus einer Sandwichplatte, die einen inneren Kern aus expandiertem Polyurethan einschließt, der allseitig mit einem Kunststoffharz aus Polyvinylchlorid (PVC) bedeckt ist, einem glasfaserverstärkten Polyesterharz oder einer Hochdrucklaminatplatte (HPL), und einer Abdeckschicht besteht, die auf einer der Plattenflächen abgeschieden ist, als Deckschicht, die aus einem Keramikmaterial gefertigt ist.

2. Verbundbauelement nach Anspruch 1, **dadurch gekennzeichnet, dass** die PVC-Folie, die glasfaserverstärkte Polyesterharzfolie oder die Hochdrucklaminatplatte (HPL) eine Dicke zwischen 1 und 4 mm aufweisen.

3. Verbundbauelement nach Anspruch 1, **dadurch gekennzeichnet, dass** die keramische Beschichtungsplatte eine Dicke von 3 mm aufweist.

4. Verbundbauelement nach Anspruch 1, **dadurch gekennzeichnet, dass** die keramische Beschichtungsplatte als Deckschicht in Granit, Quarz, Kunststein ausgeführt ist.

5. Verbundbauelement nach einem der Ansprüche 1 bis 4 zur Verwendung bei der Herstellung von Arbeitsplatten und/oder Oberflächen mit hoher Wärmebeständigkeit, wobei ein Endbearbeitungsverfahren auf diese unbeschichteten freiliegenden Oberflächen angewendet wird.

6. Verbundbauelement nach einem der Ansprüche 1 bis 4 zur Verwendung als Isolierbeschichtung für Innen- oder Außenfassaden, zum Bau von Treppen mit geringem Gewicht, zur Herstellung von Möbeln und Türverkleidungen sowie zum Bau von Wänden oder Trennwänden.

## Revendications

1. Élément constructif composite, **caractérisé en ce qu'**il est constitué d'un panneau type sandwich qui comporte un noyau intérieur composé de polyuréthane expansé revêtu sur toutes ses faces d'une résine plastique de polychlorure de vinyle (PVC), d'une résine de polyester renforcée avec de la fibre de verre ou d'une plaque stratifiée haute pression (HPL), et d'une couche de revêtement déposée sur l'un des parements du panneau, en guise de couche de finition fabriquée à partir d'un matériau céramique.

2. Élément constructif composite selon la revendication 1, **caractérisé en ce que** la feuille de PVC, la feuille de résine de polyester renforcée avec de la fibre de verre ou la plaque stratifiée haute pression (HPL) ont une épaisseur comprise entre 1 et 4 mm.

3. Élément constructif composite selon la revendication 1, **caractérisé en ce que** la plaque de revêtement céramique a une épaisseur de 3 mm.

4. Élément constructif composite selon la revendication 1, **caractérisé en ce que** la plaque de revêtement céramique comme couche de finition est réalisée en granit, quartz, pierre artificielle.

5. Élément constructif composite selon l'une quelconque des revendications 1 à 4 pour son utilisation dans la fabrication de plans de travail et/ou de surfaces à haute résistance thermique, où un processus de finition est appliqué sur ces surfaces exposées non revêtues.

6. Élément constructif composite selon l'une quelconque des revendications 1 à 4 pour son utilisation comme recouvrement isolant de façades internes ou externes, pour la construction d'escaliers légers, pour fabriquer des meubles et des panneaux de portes, ainsi que pour construire des murs ou des cloisons.
